# EUROPEAN PATENT SPECIFICATION

(11) **EP 2 803 414 B1**
(45) Date of publication and mention of the grant of the patent: **27.04.2016**
(21) Application number: 13168214.8
(22) Date of filing: 17.05.2013
(51) Int. Cl.: B01L 9/00, B01F 13/08, B01F 15/00, B01L 7/00

(54) **Hot-plate stirrer with IR temperature sensor and a holder for a glass container for chemicals**
Heißplattenrührer mit IR-Temperatursensor und einem Halter für einen Glasbehälter für Chemikalien
Agitateur magnétique chauffant avec capteur de température IR et support de récipient en verre pour produits chimiques

(43) Date of publication of application: 19.11.2014
(73) Proprietor: Milestone S.r.l., 24010 Sorisole (BG) (IT)
(72) Inventor: Visinoni, Francesco, 24030 Mozzo (BG) (IT); Pirola, Camillo, 24030 Paladina (BG) (IT)
(74) Representative: Kiwit, Benedikt

(56) References cited:
- KR-A- 20080 036 569
- US-A- 5 549 382
- US-A1- 2008 056 957
- Corning: "Working for You... Corning Precision Corning 100V Digital Hot Plates and Stirrers", , 31 May 2008 (2008-05-31), XP055084450, Retrieved from the Internet: URL:http://www.corning.com/uploadedFiles/L ifesciences/PDFs/ProductInformation/Genera lLabwareandEquipment/digital_hot_plates_st irrers_ss_CLS_GL_022_100V.pdf [retrieved on 2013-10-18]
- "Thermo Scientific Hot Plates, Stirrers and Stirring Hot Plates", , 1 January 2009 (2009-01-01), XP055084428, Retrieved from the Internet: URL:https://static.thermoscientific.com/im ages/D17368~.pdf [retrieved on 2013-10-18]

## Description

### Field of invention

The present invention relates to a hot-plate stirrer. In particular the present invention relates to the hot-plate stirrer with a non-contact IR temperature sensor and a holder for a glass container for chemicals for use with the same. The invention also relates to an apparatus for extracting an extract from a substance.

### Background of invention

In science laboratories a heating of chemicals in a glass reaction container is common practice.

Heat-able plates with magnetic stir-able means are known in the art and may be referred to as hot-plate stirrers. The hot-plate stirrer is used for heating of chemicals in the glass reaction container which is placed on a heat-able plate of the hot-plate stirrer.

During use of the hot-plate stirrer, a user selects a temperature to which the chemicals in the glass reaction container are heated. The chemicals in the glass reaction container are stirred by means of a magnetic stirrer present in the glass reaction container. The magnetic stirrer interacts with a rotate-able magnetic element in the hot-plate stirrer thus stirring the chemicals in the glass reaction container. The heating and the stirring can be operated simultaneously or independently.

It has been noted that during use the hot-plate stirrers have been shown to have an undesirable variability in temperature of ±20 °C from what is actually selected on the hot-plate stirrer compared to an actual temperature measured in the chemicals in the glass reaction container.

The undesirable variability in temperature is due to a position at which a temperature is read on a surface of the chemicals in the glass reaction container. The undesirable variability in temperature is also due to an accumulation of dirt (e.g. chemicals) on the heat-able plate of the hot-plate stirrer. The dirt deposits (e.g. chemicals) prevent effective heat transfer from the heat-able plate of the hot-plate stirrer to the glass reaction container. The undesirable variability in temperature means that the temperature of the chemicals in the glass reaction container is not the same as the temperature selected by the user.

A precise indication of the temperature of the chemicals in the glass reaction container is important to ensure an accurate measurement of the temperature of the chemicals in the glass reaction container and to ensure that effective chemical interactions occur between the chemicals in the glass reaction container.

To overcome some of the aforementioned drawbacks it has been known to provide the hot-plate stirrer that are connected with a thermocouple. A cable is used to connect the hot-plate stirrer with the thermocouple. The thermocouple is inserted into the chemicals in the glass reaction container. The thermocouple measures the temperature of the chemicals in the glass reaction container and compares this temperature with a selected temperature of the hot-plate stirrer. Where an undesirable variability in temperature is noted between the temperature of the chemicals in the glass reaction container and the selected temperature of the hot-plate stirrer, the temperature of the hot-plate stirrer is automatically adjusted so that actual selected temperature of the hot-plate stirrer is the same temperature as the temperature of the chemicals in the glass reaction container as monitored by the thermocouple. An example of such the hot-plate stirrer is known in the art and is manufactured by Thermo-Fisher Scientific as the RT and RT Elite systems - see product brochure downloaded from the internet on the 2-April-2013 at http://www.thermofisher.com.au/Uploads/file/Scientific/Laboratory-Equipment-Furniture/Small-Equipment/Thermo-Scientific-Hotplates-and-Stirrers.pdf.

The RT and RT Elite hot-plate stirrers suffer many drawbacks. The thermocouples are fragile, which means that they are easily damaged and often need replacing. The thermocouples require maintenance and effective cleaning to ensure accurate temperature measurements. The cable that is used to connect the thermocouple to the hot-plate stirrer is cumbersome and liable to damage from chemicals and use thus rendering the thermocouple ineffective. The cable that is used to connect the thermocouple to the hot-plate stirrer intrudes a workspace when in use. An input port to connect the thermocouple to the hot-plate stirrer can be damaged by chemicals thus causing an ineffective connection between the thermocouple and the hot-plate stirrer. The thermocouple itself can be damaged by chemicals in the glass reaction container. A user my simply forget to introduce the thermocouple.

In the publication of Corning: "Working for You... Corning Precision, Corning® 100V Digital Hot Plates and Stirrers", 31 May 2008, XP055084450, Retrieved from the Internet on 18 October 2013: URL: http://www.corning.com/uploadedFiles/Lifesciences/PDFs/ProductInformation/GeneralL abwareandEquipment/digital_hot_plates_stirrers_ss_CLS_GL_022_100V.pdf there are shown hot plates and their accessories like common stirrers, boss head clamps and holding rods.

US 5,549,382 A relates to a cooking stove for a kitchen for automatically stirring food.

There is a need to provide a hot-plate stirrer which can firmly hold a glass reaction container on the hot-plate stirrer.

Thus there is a need to provide a hot-plate stirrer that overcomes the aforementioned problems whilst accurately maintaining a desired selected temperature of the chemicals in the glass reaction container that is consistent with the actual selected temperature on the hot-plate stirrer.

### Summary of invention

The invention provides a hot-plate stirrer. The hot plate stirrer comprises at least one non-contact IR temperature sensor which is functionally connected to a control unit of the hot-plate stirrer system. The control unit controls a heating of a heat-able plate and an operation of a magnetised stir-able device. The hot-plate stirrer also comprises a holder. The hot-plate stirrer also comprises a glass container such that the holder and the glass container are designed such that the holder without being in contact with the heat-able plate holds the glass container such that the glass container is in contact with the heat-able plate

The invention thus provides a holder for a glass container for use with the hot-plate stirrer. The hot-plate stirrer comprises an engagement/positioning means to couple with the holder for the glass container by means of engagement/positioning means at a base of the holder.

The hot-plate stirrer according to a further aspect comprises an attachment, attached to the rear of the hot-plate stirrer. The attachment can be in the form of a counterweight and/or comprises an inlet for an insertion of a rod.

The invention provides an apparatus for extracting an extract from a substance using the hot-plate stirrer. In the apparatus an inner glass container is within the glass container. The inner glass container comprises the substance from which an extract is to be obtained. A condenser is placed on top of the inner glass container for condensing a vaporize-able solvent and providing the condense-able solvent to the inner glass container. An outlet is provided to provide solvent from the inner glass container to the glass container. The apparatus comprises a first magnetic stirrer within the glass container and a second magnetic stirrer within the inner glass container.

### Brief description of figures

Figure 1 shows a hot-plate stirrer according to an aspect of the present invention.
Figure 2 shows a top view of a hot-plate stirrer according to an aspect of the present.
Figure 3 shows a holder for a glass container for chemicals to be used with a hot-plate stirrer according to an aspect of the present invention.
Figure 4 shows a holder for a glass container for chemicals including the glass container to be used a hot-plate stirrer according to an aspect of the present invention.
Figure 5 shows a holder for a glass container for chemicals in which the holder is coupled with a hot-plate stirrer according to an aspect of the present invention.
Figure 6 shows a glass container for chemicals comprising a modified Soxhlet according to an aspect of the present invention.

### Detailed description

For a complete understanding of the present invention and the advantages thereof, reference is made to the following detailed description taken in conjunction with the accompanying figures.

It should be appreciated that the various aspects of the invention discussed herein are illustrative of the specific ways to make and use the invention and do not limit the scope of invention when taken into consideration with the claims and the following detailed description. It will also be appreciated that features from one aspect of the invention may be combined with features from other aspects of the invention.

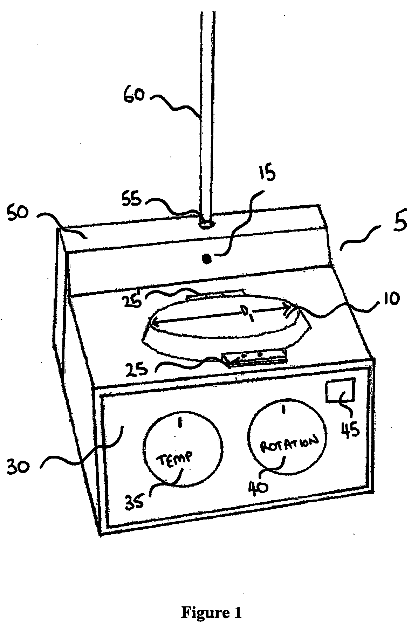

Figure 1 shows a hot-plate stirrer 5 according to the present invention. The hot-plate stirrer 5 is powered by electricity. A heat-able plate 10 with a diameter D₁ is heat-able based on a temperature selected by a temperature selector35. A magnetised stir-able device (not shown) is located beneath the heat-able plate 10 and is conventionally in the form of a rotating magnetic element (not shown) which is operable by means of a rotation speed selector 40. The rotation speed selector 40 determines a speed at which the rotating magnetic element (not shown) rotates. The rotating magnetic element (not shown) interacts with a magnetic stirrer 75 (not shown - see later discussion). The magnetic stirrer 75 (not shown - see later discussion) is present in a glass container 70 for chemicals (not shown - see later discussion) and is used to stir chemicals which are present in the glass container 70 (not shown - see later discussion). The hot-plate stirrer 5 can be used to heat and/or stir chemicals which are present in the glass container 70 when placed on the heat-able plate 10.

The temperature selector 35is operable to heat the heat-able plate 10 in temperature ranges up to 450 ºC with increments of 1 ºC.

The rotation speed selector 40 is operable in the range of 50-1200 RPM.

The hot-plate stirrer 5 can accommodate a total weight of 20Kg.

A control panel 30 of the hot-plate stirrer 5 comprises the temperature selector 35, the rotation speed selector 40 and a timer/alarm 45. The temperature selector 35, the rotation speed selector 40 and the timer/alarm 45 can be in the form of analogue and/or digital device or any combination thereof, such as, for example dials and/or electronic touchpad's. By combining the features of the temperature selector 35, the rotation speed selector 40 and a timer/alarm 45, a user can determine a required duration of heat and/or stirring of chemicals and then be notified by the timer/alarm 45 when the required duration of heat and/or stirring of chemicals is complete. The timer/alarm 45 as noted can be in the form of analogue or digital device and the alarm function may be audible and/or visible allowing the user to be informed when the required duration of heat and/or stirring of chemicals is complete. The timer/alarm 45 can also be used to switch off heat and/or stirring of the hot-plate stirrer 5. The timer/alarm 45 can also be used to carry out heat and/or stirring at different times.

A warning indicator (not shown) may also be present on the control panel 30. The warning indicator (not shown) displays a signal when a temperature of the heat-able plate 10 is above 50 ºC. The warning indicator thus informs the user that the heat-able plate 10 has a temperature of above 50 ºC and care should be taken for example after use of the hot plate stirrer 5 to avoid any potential injury to the user.

The hot-plate stirrer 5 comprises a non-contact IR temperature sensor 15. When the hot-plate stirrer 5 is in operation the non-contact IR temperature sensor 15 measures a temperature of the chemicals in the glass container 70 and compares this temperature with a selected temperature of the temperature selector35. Where an undesirable variability in temperature is noted the temperature of the hot-plate stirrer 5 is automatically adjusted so that actual selected temperature of the hot-plate stirrer 5 is the same temperature as the temperature of the chemicals in the glass reaction 70 container as monitored by the non-contact IR temperature sensor 15 and thus overcomes the undesirable variability in temperature. The non-contact IR temperature sensor 15 is positioned such that it is directed towards the glass container 70 for chemicals which is placed on the heat-able plate 10.

The non-contact IR temperature sensor 15 is functionally connected to a control unit, present within the control panel 30 of the hot-plate stirrer 5. The control unit is responsible for controlling the heating of the heat-able plate 10 and the rotating magnetic element and thus the rotation of the magnetic stirrer 75 (not shown - see later discussion).

The presence of the non-contact IR temperature sensor 15 overcomes the undesirable variability in temperature with hot-plate stirrers of the prior art and the drawbacks encountered with the hot-plate stirrers with thermocouples of the prior art. The non-contact IR temperature sensor 15 is an integrated part of the hot-plate stirrer 5 and is not as fragile as thermocouples. The non-contact IR temperature sensor 15 requires no maintenance and cleaning to ensure accurate temperature measurements. The non-contact IR temperature sensor 15 eliminates the need for a cable that is used to connect the thermocouple to the hot-plate stirrer 5; such cables are cumbersome and liable to damage from chemicals and use thus rendering the thermocouple ineffective. The non-contact IR temperature sensor 15 eliminates the use of a cable that is used to connect the thermocouple to the hot-plate stirrer; such a cable intrudes a workspace when in use. The non-contact IR temperature sensor 15 eliminates the need for an input port to connect the thermocouple to the hot-plate stirrer; such an input port can be damaged by chemicals thus causing an ineffective connection between the thermocouple and the hot-plate stirrer 5. In circumstances where us a user may simply forget to introduce the thermocouple this is overcome by the presence of the non-contact IR temperature sensor 15. Since the hot-plate stirrer 5 of the present invention overcomes the need for a thermocouple, the hot-plate stirrer 5 of the present invention is a simpler and more cost effective than those that require frequent replacement of the thermocouple.

It is to be appreciated that more than one non-contact IR temperature sensor 15 may part of the hot-plate stirrer 5.

The hot-plate stirrer 5 may also include an attachment 50 at a rear of the hot-plate stirrer 5. The attachment 50 can be attached to the hot-plate stirrer 5 by any conventional means. The attachment 50 can be in the form of a counterweight and is useful when a large glass container 70 is used which may compromise a stability of the hot-plate stirrer 5 when in use. The attachment 50 can also have different weights depending on the required stability of the hot-plate stirrer 5.

The attachment 50 at the rear of the hot-plate stirrer 5 further includes an inlet 55 for an insertion of a rod 60. The rod 60 can be used to attach clamps. The rod 60 and the clamps are made conventionally of metal. The rod 60 can be attached to the inlet 55 either by a simple push-fit mechanism or by screwing the rod 60 into the inlet 55. The clamps are then used to hold various laboratory items that may be needed during use of the hot-plate stirrer 5. An advantage of the attachment 50 at rear of the hot-plate stirrer 5 which includes the inlet 55 for the insertion of the rod 60 is that such a system avoids the need for a separate clamp stand with rods and clamps when using the hot-plate stirrer 5.

The hot-plate stirrer 5 further comprises an engagement/positioning means 25 and 25' to couple the hot-plate stirrer 5 with a holder 65 for a glass container 70.

The engagement/positioning means 25 and 25' of the hotplate stirrer 5 couples with an engagement/positioning means 80 at a base of the holder 65 for the glass container 70 for chemicals to couple the holder 65 for glass container 70 on the hot-plate stirrer 5 (see later discussion).

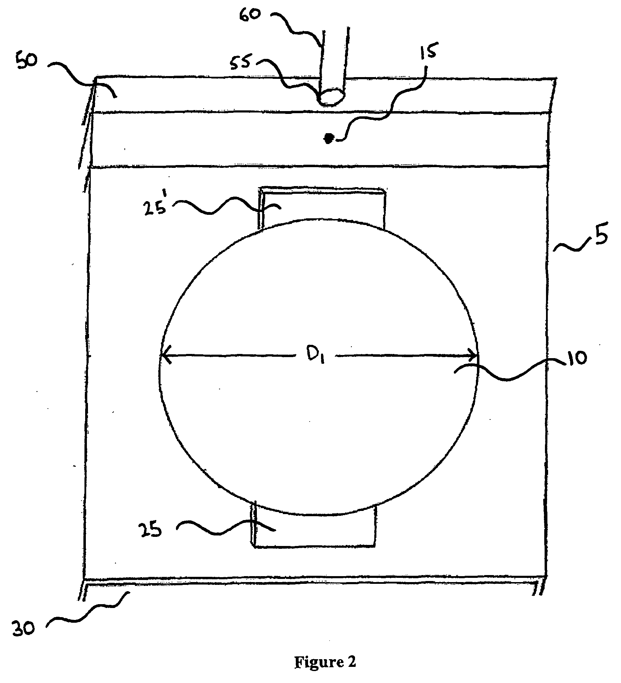

Figure 2 shows a top view of the hot-plate stirrer 5 according the present invention. The orientation of the engagement/positioning means 25 and 25' of the hotplate stirrer 5 are shown to be opposite one another in the hotplate stirrer 5.

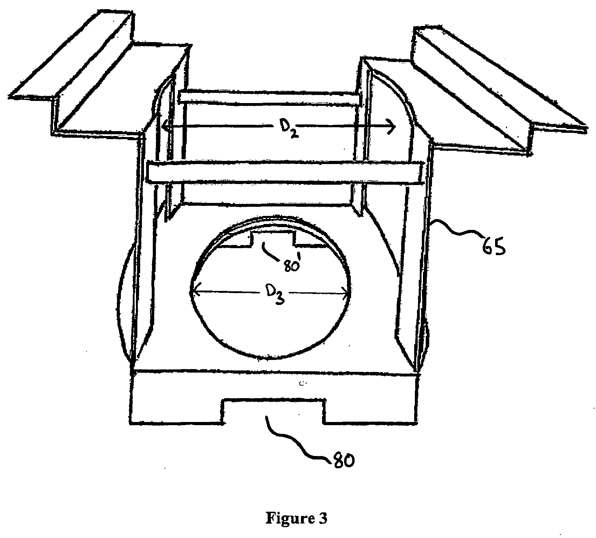

Figure 3 shows the holder 65 for the glass container 70 for chemicals to be used with a hot-plate stirrer 5 according to the present invention. The holder 65 for the glass reaction container 70 comprises an engagement/positioning means 80 and 80' at a base of the holder 65 for the glass container 70 for chemicals to couple the holder 65 for glass container 70 on the hot-plate stirrer 5 by means the engagement/positioning means 25 and 25' of the hotplate stirrer 5.

The holder 65 for the glass container 70 is manufactured from a metal such that it can withstand the temperatures of the heat able plate 10, when it is used on the hot-plate stirrer 5.

The holder 65 for the glass container 70 is preferably manufactured as a monolith structure (i.e. a single piece). The monolith structure of the holder 65 for the glass container 70 ensures a rigid single structure of the holder 65 for the glass container 70 which is less liable to damage if for example the holder 65 is dropped.

The holder 65 for the glass container 70 can have different diameters D₂, according to the different diameters of the glass container 70 for chemicals commonly used in science laboratories.

The glass container 70 is usually in the form of a flat bottomed glass beaker as known in the art.

The heat-able plate 10 has a diameter D₁. An opening an opening at the base of the holder (65) has a diameter D₃. The diameter D₁ is smaller that diameter D₃. Due to the difference in diameter of D₁ and D₃ only the glass container 70 is in contact with the heat-able plate 10 and contact between the holder 65 the heat-able plate 10 is eliminated. Thus the holder 65 remains cold as it is not in contact with the heat-able plate 10.

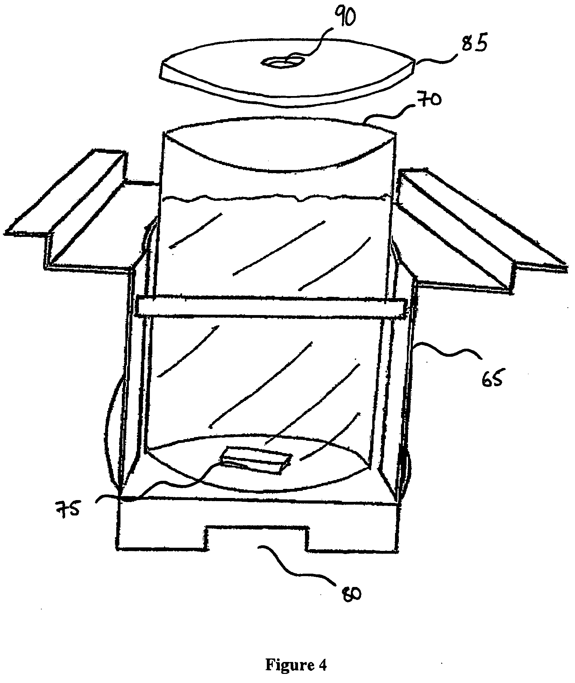

Figure 4 shows the holder 65 for the glass container 70 for chemicals including the glass container 70 according to the present invention. The glass container 70 is shown positioned within the holder 65. Within the glass container 70 is shown the magnetic stirrer 75. As noted previously when in use with the hot-plate stirrer 5, the rotation speed selector 40 determines a speed at which the rotating magnetic element (not shown) rotates. The rotating magnetic element (not shown) interacts with the magnetic stirrer 75 and is used to stir chemicals present in the glass container 70.

The glass container 70 for chemicals may be fitted with a lid 85. The lid 85 forms a seal with the glass container 70 for chemicals. The lid 85 may further comprise an aperture 90. To the aperture 90 an apparatus 95 such as, for e.g. a condenser can be attached. A connection between the apparatus 95 such as, for e.g. the condenser and the aperture 90 is air tight in order to ensure that chemicals in the glass container 70 cannot leave the glass container 70 for chemicals.

The lid 85 is preferably manufactured from a material with thermal resistance and resistance to chemicals, such as for e.g. polytetrafluoroethylene (PTFE), polyphenylsuphone (PPSF). An advantage of using the lid 85 of a material with thermal resistance and resistance to chemicals is that the lid 85 remains cold during use of the hot plate stirrer 5 and is not damaged by chemicals that are used.

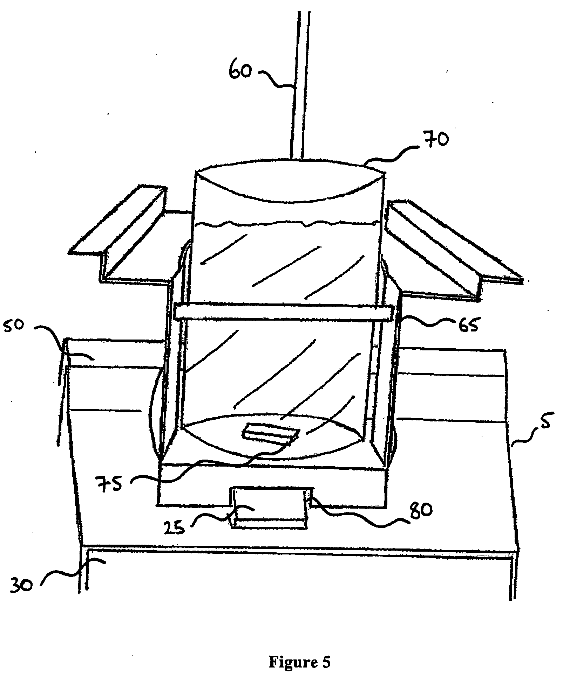

Figure 5 shows the holder 65 for the glass container 70 for chemicals in which the holder 65 including the glass container 70 is coupled with the hot-plate stirrer 5 according to the present invention. As has been noted when the holder 65 is placed on the hot-plate stirrer 5 the engagement/positioning means 25 and 25' of the hot-plate stirrer 5 couple with the holder 65 by means of the engagement/positioning means 80 and 80' at base of holder 65. This arrangement of coupling means 25 and 25' with 80 and 80' ensures that the holder 65 with the glass container 70 for chemicals is firmly kept in position on the hot plate stirrer 5 during use. If the holder is not used a stability of the glass container 70 for chemicals on the hot-plate stirrer 5 can be compromised, when for example the hot plate stirrer 5 is used to rapidly stir chemicals in the glass container 70.

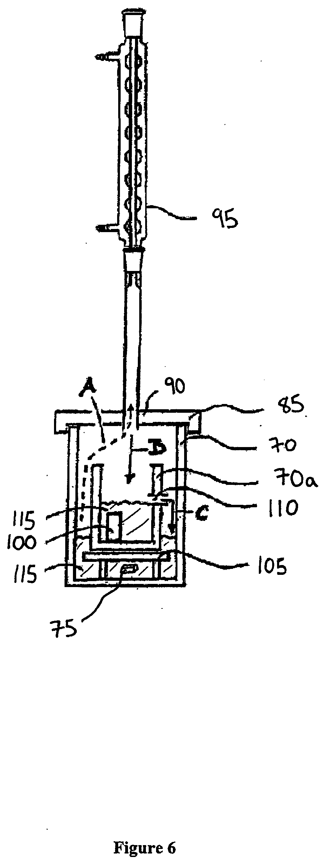

Figure 6 shows the glass container 70 for chemicals comprising a modified Soxhlet. The modified Soxhlet is used to obtain an extract from a substance 100. The glass container 70 for chemicals comprising a modified Soxhlet is described in European patent No EP 2371437, the contents of which are incorporated herein in its entirety.

It is to be appreciated that the glass container 70 for chemicals comprising the modified Soxhlet can be used with the present invention. The glass container 70 for chemicals comprising the modified Soxhlet can e placed in the holder 65 (not shown), which is in turn placed on the hot-plate stirrer 5 (not shown) when is use as previously described.

With respect to figure 6, into the glass container 70 is placed an inner glass container 70a. The inner glass container 70a is smaller in size than the glass container 70 in terms of height and diameter. The inner glass container 70a, like the glass container 70 is usually in the form of a flat bottomed glass beaker as known in the art.

Preferably, the inner glass container 70 is placed onto a support 105 which is present within the glass container 70. The inner glass container 70a is placed at a defined distance from a base of the glass container 70 on the support 105.

The inner glass container 70a comprises an outlet 110 for providing a solvent 115 from the inner glass container 70a to the glass container 70. The outlet 110 is preferably provided within a sidewall of the inner glass container 70a.

When using the modified Soxhlet, with the present invention, the substance 100 from which an extract is to be obtained is placed in the inner glass container 70a.

The solvent 115 is placed into the glass container 70. Preferably only a part of the solvent 115 when starting an extraction process is placed into the glass container 70 and the remaining solvent 115 is placed in the inner glass container 70a.

The lid 85 is attached to the glass container 70. To the aperture 90 of the lid 85, the apparatus 95 in the form of a condenser is attached.

With reference to figure 6, a circulation of the solvent 115 is now explained. The circulation is indicated by arrows A, B and C. With the circulation of the solvent 115, the extract from the substance 100 is obtained.

When in use with the hot-plate stirrer 5, the solvent 115 within the glass container 70 is heated so that solvent 115 not containing any extract from substance 100 is vaporized as shown by arrow A. the solvent 115 shown by arrow A ascends into the condenser 95 (which is connected to a water source - not shown). In the condenser 95 the vaporized solvent 115 is condensed and as shown by arrow B drops down into the into the inner glass container 70a. Within the inner glass container 70a the solvent 115 surrounds the substance 100 and extracts the extract from the substance 100. When the solvent 115 within inner glass container 70a reaches a predefined level, determined by the type and/or position of the outlet 110, the solvent 115 containing the extract as shown by arrow C is provided to the glass container 70. This process then repeats as long as the solvent 115 is heated and vaporized such that the extract is continuously extracted from the substance 110.

The magnetic stirrer 75 can be present in the glass container 70 and/or the inner glass container 70a. The presence of the magnetic stirrer 75 ensures agitation of the substance 100 and thus provides a more effective extraction of the extract from the substance 100.

When using the holder 65 for the glass container 70 in the embodiment of figure 6, a stability of the entire apparatus is not compromised. Furthermore the hot-plate stirrer 5 of the present invention ensures that the temperature of the solvent 115 is accurately maintained.

Having thus described the present invention and the advantages thereof, it should be appreciated that the various aspects and embodiments of the present invention as disclosed herein are merely illustrative of specific ways to make and use the invention.

The various aspects and embodiments of the present invention do not limit the scope of the invention when taken into consideration with the appended claims, the forgoing detailed description and the accompanying figures. Features from one aspect and embodiment of the present invention as disclosed herein can be combined with features from other aspects and embodiments of the present invention.

## Claims

1. A hot-plate stirrer system (5) comprising:
- at least one non-contact temperature sensor (15) functionally connected to a control unit of the hot-plate stirrer system (5), the control unit controlling a heating of a heat-able plate (10) and an operation of a magnetised stir-able device,
- a holder (65),
- a glass container (70), wherein the holder (65) and the glass container (70) are designed such that the holder (65) without being in contact with the heat-able plate (10), holds the glass container (70) such that the glass container (70) is in contact with the heat-able plate (10), and
- an engagement/positioning means (25, 25') to couple with the holder (65) for the glass container (70) by means of engagement/positioning means (80, 80') at a base of the holder (65).

2. The hot-plate stirrer system (5) according to claim 1, further comprising an attachment (50) attached to a rear of the hot-plate stirrer system (5).

3. The hot-plate stirrer system (5) according to claim 2, wherein the attachment (50) is in the form of a counterweight and/or comprises an inlet (55) for an insertion of a rod (60).

4. The hot-plate stirrer system (5) according to any one of the above claims, wherein a diameter (D₁) of a heat-able plate (10) of the hotplate stirrer (5), is smaller than a diameter (D₂) of an opening at the base of the holder (65).

5. An apparatus for extracting an extract from a substance (100) comprising:
- the hot-plate stirrer system (5) of any one of the above claims, wherein an inner glass container (70a) is within the glass container (70), the inner glass container (70a) comprising the substance (100) from which an extract is to be obtained,
- a condenser (95) placed on top of the inner glass container (70a) for condensing a vaporize-able solvent (115) and providing the condense-able solvent (115) to the inner glass container (70a),
- an outlet (110) to provide solvent (115) from the inner glass container (70a) to the glass container (70); and
- a first magnetic stirrer (75) within the glass container (70) and a second magnetic stirrer (75) within the inner glass container (70a).

## Patentansprüche

1. Heißplatten-Rührersystem (5) mit:
- mindestens einem kontaktlosen Temperatursensor (15), der funktional mit einer Steuereinheit des Heißplatten-Rührersystems (5) verbunden ist, wobei die Steuereinheit ein Erhitzen einer heizbaren Platte (10) und eine Betätigung einer magnetisierten Rührvorrichtung steuert,
- einem Halter (65),
- einem Glasbehälter (70), wobei der Halter (65) und der Glasbehälter (70) derart ausgeführt sind, dass der Halter (65), ohne dass er mit der heizbaren Platte (10) in Kontakt steht, den Glasbehälter (70) derart hält, dass der Glasbehälter (70) mit der heizbaren Platte (10) in Kontakt steht, und
- einer Eingriffs-/Positionierungseinrichtung (25, 25'), die mit dem Halter (65) für den Glasbehälter (70) mit Hilfe von Eingriffs-/Positionierungseinrichtungen (80, 80') an einem Sockel des Halters (65) gekoppelt wird.

2. Heißplatten-Rührersystem (5) gemäß Anspruch 1, weiterhin mit einem Zusatzteil (50), das an einer Rückseite des Heißplatten-Rührersystems (5) angebracht ist.

3. Heißplatten-Rührersystem (5) gemäß Anspruch 2, wobei das Zusatzteil (50) in Form eines Gegengewichtes vorliegt und/oder einen Einlass (55) für eine Einführung eines Stabes (60) aufweist.

4. Heißplatten-Rührersystem (5) gemäß einem der vorstehenden Ansprüche, wobei ein Durchmesser (D₁) einer heizbaren Platte (10) des Heißplatten-Rührers (5) geringer ist als ein Durchmesser (D₂) einer Öffnung an dem Sockel des Halters (65).

5. Vorrichtung zum Extrahieren eines Extraktes aus einer Substanz (100) mit:
- dem Heißplatten-Rührsystem (5) nach einem der vorstehenden Ansprüche, wobei sich ein innerer Glasbehälter (70a) in dem Glasbehälter (70) befindet, wobei der innere Glasbehälter (70a) die Substanz (100) enthält, aus der ein Extrakt gewonnen werden soll,
- einem Kondensator (95), der oben auf dem inneren Glasbehälter (70a) zum Kondensieren eines verdampfbaren Lösungsmittels (115) und zum Bereitstellen des kondensierbaren Lösungsmittels (115) für den inneren Glasbehälter (70a) angebracht ist,
- einem Auslass (110) zur Bereitstellung von Lösungsmittel (115) aus dem inneren Glasbehälter (70a) für den Glasbehälter (70); sowie
- einem ersten Magnetrührer (75) in dem Glasbehälter (70) und einem zweiten Magnetrührer (75) in dem inneren Glasbehälter (70a).

## Revendications

1. Système d'agitateur à plaque chauffante (5) comprenant :
- au moins un capteur de température sans contact (15) connecté fonctionnellement à une unité de commande du système d'agitateur à plaque chauffante (5), l'unité de commande commandant un chauffage d'une plaque chauffante (10) et un fonctionnement d'un dispositif magnétisé pouvant être agité,
- un support (65),
- un récipient en verre (70), dans lequel le support (65) et le récipient en verre (70) sont conçus de manière que le support (65), sans être en contact avec la plaque chauffante (10), supporte le récipient en verre (70) de manière que le récipient en verre (70) soit en contact avec la plaque chauffante (10), et
- un moyen d'engagement/positionnement (25, 25') pour s'accoupler avec le support (65) pour le récipient en verre (70) par l'intermédiaire de moyens d'engagement/positionnement (80, 80') au niveau d'une base du support (65).

2. Système d'agitateur à plaque chauffante (5) selon la revendication 1, comprenant en outre une fixation (50) fixée à une partie arrière du système d'agitateur à plaque chauffante (5).

3. Système d'agitateur à plaque chauffante (5) selon la revendication 2, dans lequel la fixation (50) est réalisée sous la forme d'un contrepoids et/ou comprend une entrée (55) pour une insertion d'une tige (60).

4. Système d'agitateur à plaque chauffante (5) selon l'une quelconque des revendications précédentes, dans lequel un diamètre (D₁) d'une plaque chauffante (10) de l'agitateur à plaque chauffante (5) est inférieur à un diamètre (D₂) d'une ouverture au niveau de la base du support (65).

5. Appareil pour extraire un extrait d'une substance (100) comprenant :
- le système d'agitateur à plaque chauffante (5) selon l'une quelconque des revendications précédentes, dans lequel un récipient en verre interne (70a) est disposé à l'intérieur du récipient en verre (70), le récipient en verre interne (70a) comprenant la substance (100) à partir de laquelle un extrait doit être obtenu,
- un condenseur (95) placé au sommet du récipient en verre interne (70a) pour condenser un solvant vaporisable (115) et fournir un solvant condensable (115) au récipient en verre interne (70a),
- une sortie (110) pour délivrer du solvant (115), à partir du récipient en verre interne (70a), au récipient en verre (70) ; et
- un premier agitateur magnétique (75) à l'intérieur du récipient en verre (70) et un deuxième agitateur magnétique (75) à l'intérieur du récipient en verre interne (70a).
